# EUROPÄISCHE PATENTANMELDUNG

(11) **EP 0 659 824 A1**
(43) Veröffentlichungstag der Anmeldung: **28.06.1995**
(21) Anmeldenummer: 94116515.1
(22) Anmeldetag: 20.10.1994
(51) Int. Cl.: C08L 23/16, C08J 5/12

(54) **Haftvermittlerfreie Verbunde zwischen thermoplastischen Polyesterelastomeren und thermoplastischen Polyesterformmassen**

(30) Priorität: 21.12.1993 DE 4343586
(71) Anmelder: HÜLS AKTIENGESELLSCHAFT, D-45764 Marl (DE)
(72) Erfinder: Schmidt, Friedrich Georg, Dr., D-45721 Haltern (DE); Beyer, Horst, D-45527 Hattingen (DE)

(57) **Zusammenfassung**

Es sollten Verbundgegenstände zur Verfügung gestellt werden, bei denen Polyester mit einem nicht beeinträchtigten Verarbeitungsverhalten und handelsübliche, unfunktionalisierte EP(D)M-Typen eingesetzt werden.

Diese Aufgabe wird durch Verbundgegenstände gelöst, bei denen die harte Komponente auf einem thermoplastischen Polyester basiert und die weiche Komponente durch dynamische Vulkanisation eines Gemisches hergestellt wird, das folgende Bestandteile enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels.

Die erfindungsgemäßen Verbundgegenstände lassen sich schnell herstellen; zudem wird eine feste Haftung zwischen den Verbundpartnern erzielt.

## Beschreibung

Die vorliegende Erfindung betrifft Verbundgegenstände aus mindestens einer harten und mindestens einer weichen Komponente, wobei die harte Komponente auf einem thermoplastischen Polyester basiert und die weiche Komponente ein thermoplastisches Elastomer ist, das aus einem bestimmten Polyester und einem dynamisch vulkanisierten EP(D)M-Kautschuk zusammengesetzt ist. Die Erfindung betrifft weiterhin ein Verfahren zur Herstellung derartiger Verbundgegenstände.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus verschiedenen Werkstoffen eine notwendige Voraussetzung.

Die technische Aufgabe, Kautschuke und Thermoplaste fest miteinander zu verbinden, ist alt und bisher auf verschiedene, insgesamt nicht befriedigende Arten gelöst.

Verbundwerkstoffe aus thermoplastisch steifen und gummielastischen Formstoffen werden üblicherweise durch Kleben, Verschrauben, Nieten, mechanisches Verkrallen oder unter Verwendung eines Haftvermittlers zusammengefügt. In neuerer Zeit sind interessante Verfahren zur Herstellung eines Verbundes zwischen Formmassen auf Basis von Polyphenylenethern (PPE) und bestimmten, mit Schwefel bzw. Peroxid vulkanisierbaren Kautschuken entwickelt worden (vgl. EP-A-0 196 407 und EP-A-0 315 749).

Die hierbei erzielten Haftfestigkeitswerte sind beachtlich. Nachdem Verbundwerkstoffe der soeben geschilderten Art grundsätzlich herstellbar sind, möchte man aber in der Lage sein, auch Verbundwerkstoffe herzustellen, deren thermoplastische Komponente neben einer hohen Wärmeformbeständigkeit gleichzeitig eine gute Lösemittelbeständigkeit, Stabilität bei Bewitterung sowie ein ausgezeichnetes Gleitreibungsverhalten aufweist.

Obwohl bekannt ist, daß die aus den angeführten Anmeldungen bekannten Verfahren an bestimmte kritische Parameter geknüpft sind, könnte man grundsätzlich daran denken, den Polyphenylenether durch andere Thermoplasten zu ersetzen, die bekannterweise den genannten Anforderungen besser gerecht werden. Es hat sich jedoch gezeigt, daß sich beispielsweise mit Polyestern, die den oben genannten Anforderungen gerecht werden, unter den als wesentlich erkannten Verfahrensbedingungen keine ausreichenden Haftungswerte erzielen lassen. Es erschien daher nicht möglich, Verbunde zwischen thermoplastischen Polyestern und Kautschuken herzustellen.

In der EP-A-0 375 867 wird ein Verfahren zur Herstellung solcher Verbunde angegeben, bei denen der Thermoplastanteil zu mindestens 30 % aus einem Umsetzungsprodukt aus einem thermoplastischen Polyester und einem Polyisocyanat besteht. Diese Polyester haben den Nachteil, daß sie bei hinreichend hoher Konzentration an Polyisocyanat nur in einem sehr engen Verarbeitungsfenster spritzgegossen oder extrudiert werden können. Außerdem kann kein üblicher EP(D)M-Typ verwendet werden, sondern man muß auf funktionalisierte Typen zurückgreifen, die Säure- oder Anhydridgruppen tragen. Derartige Verbunde können daher nur auf aufwendige Weise hergestellt werden.

Es wurden jetzt überraschend Verbunde aufgefunden, bei denen Polyester mit einem nicht beeinträchtigten Verarbeitungsverhalten eingesetzt werden können und bei denen handelsübliche, unfunktionalisierte EP(D)M-Typen verwendet werden. Derartige Verbunde haben mindestens eine harte Komponente, die aus einem thermoplastischen aromatischen Polyester, einer Polyesterformmasse, einem Polyesterblend oder einem Faserverbundwerkstoff mit Polyestermatrix besteht, sowie mindestens eine weiche Komponente, die dadurch hergestellt wird, daß man ein Gemisch, das folgende Bestandteile enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels,
durch dynamische Vulkanisation, d. h. Vulkanisation während des Schmelzemischens, zu einem thermoplastischen Elastomeren umsetzt.

Als thermoplastischer aromatischer Polyester soll ein lineares, film- oder faserbildendes teilkristallines Kondensationsprodukt aus aromatischen Dicarbonsäuren mit 8 bis 14 C-Atomen und mindestens einem Diol der Formel HO-(CH₂)ₙ-OH mit n = 2 bis 12, wie z. B. Ethylenglykol, Propandiol-(1,3), Butandiol-(1,4) und Hexandiol-(1,6), und/oder Neopentylglykol und/oder 1,4-Cyclohexandimethanol verwendet werden. Bis 20 Mol-% der aromatischen Dicarbonsäure können durch (cyclo)aliphatische Dicarbonsäuren mit 2 bis 12 C-Atomen ersetzt werden. Bevorzugte Polyester stellt die Gruppe der Poly(alkylenterephthalate) dar. Als Poly(alkylenterephthalate) werden neben Poly(propylenterephthalat) bevorzugt Poly(ethylenterephthalat) und Poly(butylenterephthalat) eingesetzt. Bis zu 20 Mol-%, vorzugsweise bis zu 15 Mol-% der Terephthalsäure im Poly(alkylenterephthalat), können durch aromatische, cycloaliphatische oder aliphatische Dicarbonsäuren ersetzt werden. Beispiele geeigneter Dicarbonsäuren sind Isophthalsäure, Phthalsäure, Cyclohexan-1,4-dicarbonsäure, Adipinsäure, Sebacinsäure, Azelainsäure, Decandicarbonsäure o. ä. Als Diolkomponenten können auch Poly(oxyalkylen)diole wie z. B. Poly(oxytetramethylen)diol oder verzweigte Alkylendiole, wie z. B. 2-Methyl-1,4-butandiol, eingesetzt werden.

Die erfindungsgemäß eingesetzten Polyester weisen eine Lösungsviskosität J im Bereich von 80 bis 240 cm³/g auf, gemessen nach DIN 53 728 bei 25 °C an einer Lösung in Phenol/1,2-Dichlorbenzol (50 : 50, w/w) mit einer Konzentration von 5 g/l.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Grapbit, Metallflitter, Titandioxid und Zinksulfid, Glas- bzw. Hohlglaskugeln, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 Gew.-%, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: PBT/PC- oder PET/PC-Blends, schlagzähmodifizierte Polyester, die als Schlagzähkomponente etwa MSA- oder glycidylmethacrylatmodifizierte Kautschuke enthalten, Polyester/Polyamid-Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martuscelli, R. Palumbo und M. Kryszewski, Plenum Press, New York, 1980; Polymer Alloys III, Ed.: D. Klempner und K. C. Frisch, Plenum Press, New York, 1983; WO-A-87/00850; EP-A-0 037 547; EP-A-0 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Die in der weichen Komponente erfindungsgemäß verwendeten EP(D)M-Kautschuke können nach bekannten Verfahren hergestellt werden.

Der EPM-Kautschuk wird in bekannter Weise durch katalytische Polymerisation eines Gemisches aus 25 - 75 Gew.-% Ethylen und 75 - 25 Gew.-% Propylen hergestellt.

Der EPDM-Kautschuk wird durch Polymerisation eines Gemisches aus
mehr als 25 Gew.-% Ethylen
mehr als 25 Gew.-% Propylen und
bis 10 Gew.-%, insbesondere 1 bis 3 Gew.-% eines vorzugsweise nicht konjugierten Diens wie Bicyclo(2.2.1)-heptadien, Hexadien-1,4, Dicyclopentadien und insbesondere 5-Ethylidennorbornen hergestellt.

Im Rahmen der vorliegenden Erfindung können bis zu 90 Gew.-% und bevorzugt bis zu 70 Gew.-% des EP(D)M-Kautschuks durch andere Kautschuke wie zum Beispiel Nitrilkautschuk (NBR), Acrylatkautschuk, Polyoctenamer, SB-Kautschuk (als E-SBR oder L-SBR), Butadienkautschuk (BR), Naturkautschuk (NR), Isoprenkautschuk (IR), Isobuten-Isopren-Kautschuk (IIR), der auch in halogenierter Form (CIIR bzw. BIIR) vorliegen kann, ChloroprenKautschuk (CR) und/oder ein styrolhaltiges Blockcopolymer wie beispielsweise SB, SBS, SIS oder SEBS ersetzt werden. Derartige Kautschuke sind dem Fachmann wohlbekannt, so daß sich eine genauere Beschreibung erübrigt. Die inhärenten Eigenschaften der erfindungsgemäßen Polyesterelastomere können somit durch Einbringen der Charakteristika der anderen Kautschuke, falls gewünscht, modifiziert werden.

Die aliphatische Doppelbindungen enthaltenden thermoplastischen Polyester werden in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part A1, 4, Seiten 1851 - 1859 (1966)].

Geeignete aromatische Dicarbonsäuren sind z. B. Phthalsäure, Iso- und Terephthalsäure bzw. deren Ester. Die aromatischen Dicarbonsäuren können teilweise durch aliphatische und/oder cycloaliphatische Dicarbonsäuren mit bis zu 12 C-Atomen ersetzt sein. Beispielhaft seien Cyclohexan-1,4-dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure und Tetrahydroterephthalsäure als ungesättigte Dicarbonsäuren genannt.

Als Diolkomponente eignen sich beispielsweise
- Diole der allgemeinen Formel HO-(CH₂)ₙ-OH mit n = 2 bis 12, wie z. B. Ethylenglykol, Propandiol-(1,3), Butandiol-(1,4) und Hexandiol-(1,6),
- Neopentylglykol
- 1,4-Cyclohexandimethanol
- ungesättigte Diole, wie z. B. Butendiol-(1,4).

Ein Teil dieser Diole kann durch ein Poly(oxyalkylen)diol mit einem Molekulargewicht bis 3 000, wie z. B. Poly(oxyethylen)diol oder Poly(oxytetramethylen)diol, oder durch verzweigte Alkylendiole, wie z. B. 2-Methyl-1,4-butandiol, ersetzt sein.

Die erfindungsgemäß eingesetzten Polyester weisen sinnvollerweise eine Viskositätszahl J, gemessen nach DIN 53 728 bei 25 °C an einer Lösung in Phenol/1,2-Dichlorbenzol (50 : 50, w/w) mit einer Konzentration von 5 g/l, im Bereich von 80 bis 240 cm³/g auf.

In einer bevorzugten Ausführungsform verwendet man Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Besonders bevorzugt besteht die Diolkomponente aus 50 bis 99 Mol-% Butandiol-(1,4) und 1 bis 50 Mol-% Butendiol-(1,4).

Als unmodifizierter thermoplastischer aromatischer Polyester können die gleichen Typen wie für die harte Komponente verwendet werden.

Geeignete Weichmacheröle sind insbesondere naphthenische und/oder aliphatische Öle oder spezielle, in der Kautschuktechnologie übliche Weichmacher, wie z. B. Polyalkoholfettsäureester oder Thioether in einer Menge von vorzugsweise bis zu 100 Gewichtsteilen, bezogen auf 100 Gewichtsteile Kautschuk.

Als Verstärkungsmittel eignen sich alle Stoffe, die üblicherweise als Füllstoffe in Kautschuken eingesetzt werden, wie z. B. Ruß, Kieselsäure, Silikate, Calciumcarbonat wie etwa Kreide, Talkum, Kaolin oder Zinkoxid.

Die thermoplastischen Polyesterelastomere können darüber hinaus weitere Zusätze enthalten, wie z. B. übliche Vulkanisationsverzögerer oder -beschleuniger, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 25 Gew.-Teile aus.

Als Vernetzungsmittel kann jedes konventionelle Vulkanisationsmittel verwendet werden, darunter auch die freie Radikale erzeugenden Mittel wie Perketale (z. B. Hexamethyl-tetraoxa-cyclononan), Azoverbindungen [z. B. Azo-bis(2-acetoxy-propan)] und Peroxide, aromatischer oder aliphatischer Natur, wie die aromatischen Diacylperoxide und die aliphatischen Diacylperoxide, die Peroxide von zweibasigen Säuren, Ketonperoxide, Alkylperoxiester, Alkylhydroperoxide (z. B. Diacetylperoxid, Dibenzoylperoxid, Bis-2,4-dichlorbenzoylperoxid, Di-tert.-butylperoxid, Dicumylperoxid, tert.-Butylperbenzoat, tert.-Butylcumylperoxid, 2,5-Bis-(tert.-butylperoxi)-2,5-dimethylhexan, 2,5-Bis-(tert.-butylperoxi)-2,5-dimethylhexin-(3), 4,4,4',4'-Tetra-(tert.-butylperoxi)-2,2-dicyclohexylpropan, 1,4-Bis-(tert.-butylperoxi-isopropyl)-benzol, 1,1-Bis-(tert.-butylperoxi)-3,3,5-trimethylcyclohexan, Lauroylperoxid, Bernsteinsäureperoxid, Cyclohexanonperoxid, tert.-Butylperacetat und dergleichen mehr.

Geeignet sind auch die Vulkanisationsmittel bzw. Vulkanisationshilfsmittel vom Typ der Azide, wie z. B. die Azidoformiate, aromatische Polyazide und Sulfonazide und andere mehr. Ebenso können Anwendung finden die Aldehyd-Amin-Reaktionsprodukte (wie z. B. Hexamethylentetramin, Formaldehyd-Ammoniak, Formaldehyd-Ethylchlorid-Ammoniak und ähnliches), die substituierten Harnstoffe (z. B. Trimethylthioharnstoff, Diethylthioharnstoff, Dibutylthioharnstoff, Tripentyl-thioharnstoff, N,N'-Diphenylthioharnstoff), Guanidine (z. B. Diphenylguanidin, Diphenylguanidin-phthalat und das Di-o-tolylguanidin-Salz des Dibrenzkatechin-borates und ähnliche), Xanthogenate (wie z. B. das Natrium-Isopropylxanthogenat und ähnliche), Dithiocarbamate (wie z. B. Zink-Isopropyl-octyl-dithiocarbamat und andere), Imidazole, Sulfenamide, Thiuramdisulfide und ebenso p-Chinondioxim und andere.

Als Vulkanisationsmittel kann natürlich auch Schwefel selbst verwendet werden (vgl. hierzu Kirk-Othmer, Encyclopedia of Chemical Technology, Band 20, 3. Auflage, S. 337 - 364, Interscience Publishers, 1982). Das Peroxid-Vulkanisationsmittel kann allein verwendet werden oder in Gemeinschaft mit den üblichen Hilfsstoffen wie Schwefel, Maleimide einschließlich der Bis-maleimide, mehrfach ungesättigten Verbindungen (z. B. Cyanurat), Acrylsäureestern (z. B. Trimethylolpropan-trimethacrylat) und dergleichen mehr. Wird Schwefel als Vulkanisationsmittel verwendet (sei es nun in Form von elementarem Schwefel selbst oder als Schwefel in Form eines schwefelabgebenden Mittels), so ist es für gewöhnlich empfehlenswert, einen Beschleuniger der Schwefel-Vulkanisation und ebenso einen Aktivator (z. B. ein Metallsalz oder -oxid) mitzuverwenden, wie es übliche Praxis ist. Gewünschtenfalls können auch gemischte Peroxid-Vulkanisationssysteme oder gemischte Schwefel-Vulkanisationssysteme verwendet werden, z. B. Dicumylperoxid plus 2,5-Bis-(tert.-butyl-peroxi)-2,5-dimethylhexan oder Schwefel plus Tetramethylthiuramdisulfid.

Ferner können als Vernetzungsmittel auch die gängigen phenolischen Härtungssysteme verwendet werden.

Die geeigneten Vernetzungsmittel sind ausführlich beschrieben in W. Hofmann, "Vulcanization and Vulcanizing Agents", Palmerton Publishing G., New York, 1967. Die Herstellung der Kautschukmischungen wird beispielsweise von F. W. Barrow in "Rubber Compounding", Marcel Dekker Inc., New York und Basel, 1988 oder bei W. Kleemann in "Mischungen für die Elastverarbeitung", VEB Deutscher Verlag für Grundstoffindustrie, 1982, beschrieben.

Bei Verwendung von EPDM, das wegen der Dienkomponente eine gewisse Ungesättigtkeit aufweist, kann die breiteste Auswahl an Vernetzungsmitteln eingesetzt werden. Arbeitet man hingegen mit EPM, so ist man auf die Verwendung von Vernetzungsmitteln, die freie Radikale erzeugen, wie z. B. Peroxide, angewiesen.

Das Vernetzungsmittel wird in einer Menge eingesetzt, die nicht ausreicht, um eine vollständige Vulkanisation der Masse zu bewirken, die jedoch ausreichend groß ist, eine derart weitgehende Vernetzung zu bewirken, daß der Gelgehalt des resultierenden Elastomeren im Bereich von 10 bis 97 Gew.-%, bevorzugt 30 bis 95 Gew.-% und besonders bevorzugt 45 bis 95 Gew.-% liegt. Hierzu werden im allgemeinen Vernetzungsmittel-Mengen von 0,01 bis 2 Gew.-Teilen benötigt.

Der Gelgehalt wird nach Hydrolyse durch Extraktion mit Cyclohexan bei Raumtemperatur bestimmt.

Die dynamische Vulkanisation kann auf bekannte Weise auf handelsüblichen Kunststoff-Compoundiermaschinen, beispielsweise Zweischneckenknetern oder Buss-Co-Knetern, durchgeführt werden. Dabei können alle Komponenten vorgemischt und in den ersten Einzug dosiert werden. Eine weitere Möglichkeit ist die Dosierung des Thermoplasten in den ersten Einzug und die Zugabe des Kautschuks, des Vernetzungsmittels und ggf. weiterer Komponenten stromabwärts in die Schmelze. Dies hat den Vorteil, daß im Aufschmelzbereich der Maschine weniger Knetarbeit verrichtet werden muß und die Kautschukteilchen nicht zu klein gerieben werden. Größere Kautschukteilchen sind deswegen wünschenswert, weil sie wegen ihrer geringeren Oberfläche weniger Thermoplast zur Umhüllung benötigen. Hinsichtlich der Maschineneinstellung empfehlen sich langsame bis mittlere Drehzahlen bei niedrigen bis mittleren Durchsätzen.

Das so erhaltene Material besitzt Gummieigenschaften, kann dabei aber so verarbeitet werden, wie es für Thermaplasten üblich ist.

Die Herstellung der Verbunde, d. h. der aus steifen und elastomeren Komponenten zusammengesetzten Bauteile, kann ein- oder zweistufig erfolgen.

Einstufige Verfahren zur Herstellung von Verbundsystemen zwischen harten und elastomeren Segmenten sind für andere Werkstoffkombinationen unter den Bezeichnungen "Coextrusion", "einstufiges 2-Farbenspritzgießen" oder "2-Komponenten-Spritzgießen" bekannt.

Beim zweistufigen Verfahren beaufschlagt man ein vorgefertigtes Segment aus dem harten Thermoplasten, z. B. durch Zusammenpressen, Spritzgießen oder Extrudieren, mit dem thermoplastischen Elastomer. Dabei wird das thermoplastische Elastomer auf mindestens die für seine Warmverformung notwendige Temperatur erwärmt. Geeignete Temperaturen liegen zwischen 180 und 300 °C, vorzugsweise zwischen 220 und 260 °C.

Gegebenenfalls kann auch zuerst die Bauteil-Komponente aus dem thermoplastischen Elastomeren spritzgegossen und anschließend mit der Schmelze des harten Thermoplasten beaufschlagt werden.

Die erfindungsgemäßen Verbunde sowie das Verfahren zu ihrer Herstellung zeichnen sich durch folgende Vorteile aus:
- Der Verbund ist vorzugsweise in wenigen Minuten oder sogar Sekunden hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall zu einem Kohäsionsbruch im Gummi, nicht jedoch zu einer Trennung an der Phasengrenzfläche kommt.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummischläuche etc.

Im folgenden soll die Erfindung beispielhaft erläutert werden.

### Beispiele

Als Polyesterkomponenten wurden folgende Formmassen eingesetzt:
- A:: PBT-Copolyester aus 95 Mol-% 1,4-Butandiol, 5 Mol-% 1,4-Buten-2-diol als aliphatisch ungesättigte Diolkomponente und 100 Mol-% Dimethylterephthalat mit einer Lösungsviskosität von 105 cm³/g.
- B:: PBT-Polyester aus 1,4-Butandiol und Dimethylterephthalat mit einer Lösungsviskosität von 108 cm³/g.

Als EPDM-Kautschuk wurde BUNA Hüls AP 447 (Hüls AG, D-45764 Marl) mit einer Mooney-Viskosität ML (1 + 4) bei 100 °C von 85, einem Ethylengehalt von 70 % und acht Doppelbindungen pro 1 000 C-Atomen verwendet.

Als Vulkanisationsmittel wurde Luazo AP (Fa. Atochem Deutschland GmbH, Günzburg), ein 2,2'-Azodi(2-acetoxypropan), verwendet.

Die Einsatzstoffe wurden auf einer Zweiwellencompoundiermaschine ZE 25 der Fa. Berstorff, Hannover, bei einer Temperatur von 240 bis 250 °C schmelzegemischt und dynamisch vulkanisiert.

Die hergestellten Compounds wurden anschließend bei 250 °C spritzgegossen und geprüft. Das Rückstellverhalten wurde in der Art geprüft, daß die spritzgegossenen Schulterstäbe um 50 % gedehnt, anschließend ohne Zugbelastung bei Raumtemperatur 22 Stunden bzw. bei 80 °C eine Stunde gelagert und jeweils die bleibende Verformung bestimmt wurde.

### Compound I A:

Aus 25 Gew.-Teilen Copolyester A, einem Teil Vulkanisationsmittel und 75 Gew.-Teilen Kautschuk wurde eine Schmelzemischung in der oben beschriebenen Art und Weise hergestellt. Das thermoplastische Elastomer besaß einen E-Modul nach DIN 53 457 von 46 N/mm², eine Reißfestigkeit nach DIN 53 455 von 5 N/mm² und eine Reißdehnung von 81 %. Das Rückstellvermögen betrug bei Lagerung bei 23 °C 89 %, bei 80 °C 98 %.

### Compound I B:

Aus 10 Gew.-Teilen Copolyester A, 15 Gew.-Teilen Polyester B, einem Teil Vulkanisationsmittel und 75 Gew.-Teilen Kautschuk wurde eine Schmelzemischung in der oben beschriebenen Art und Weise hergestellt. Das thermoplastische Elastomer besaß einen E-Modul nach DIN 53 457 von 51 N/mm², eine Reißfestigkeit nach DIN 53 455 von 6 N/mm² und eine Reißdehnung von 91 %. Das Rückstellvermögen betrug bei 23 °C 85 %, bei 80 °C 98 %.

### Compound I C:

Aus 10 Gew.-Teilen Copolyester A, 15 Gew.-Teilen Polyester B, 0,3 Gew.-Teilen Vulkanisationsmittel und 75 Gew.-Teilen Kautschuk wurde eine Schmelzemischung in der oben beschriebenen Art und Weise hergestellt. Das thermoplastische Elastomer besaß einen E-Modul nach DIN 53 457 von 70 N/mm², eine Reißfestigkeit nach DIN 53 455 von 6 N/mm² und eine Reißdehnung von 78 %. Das Rückstellvermögen betrug bei 23 °C 83 %, bei 80 °C 92 %.

Als thermoplastische Polyesterformmassen (II) wurden folgende Produkte eingesetzt:
VESTODUR 1000 naturfarben (Hüls AG, 45764 Marl) (II a), VESTODUR 3001 (Hüls AG, 45764 Marl) (II b), und VESTODUR X4448 (Hüls AG, 45764 Marl) (II c).

Die Verbunde wurden jeweils durch Coextrusion der beiden Materialien hergestellt und anschließend auf die Verbundhaftung untersucht. Es stellte sich heraus, daß die beiden Verbundpartner nicht mehr voneinander getrennt werden konnten, ohne eine Schicht zu zerstören (siehe Tabelle 1).

**Tabelle 1**

| Ergebnisse der Verbundprüfung | | | |
|---|---|---|---|
| Polyesterformmasse | Blend | | |
| | I A | I B | I C |
| II a | kohäsiv | kohäsiv | kohäsiv |
| II b | kohäsiv | kohäsiv | kohäsiv |
| II c | kohäsiv | kohäsiv | kohäsiv |

Im Vergleich dazu ergibt die Coextrusion der Polyesterformmassen II a, II b oder II c zusammen mit BUNA HÜLS AP 447 keinen festen Verbund. Die erhaltene Schichtstruktur läßt sich ohne größeren Kraftaufwand an der Phasengrenze (d. h. adhäsiv) trennen.

Das gleiche gilt für die Coextrusion der Polyesterformmassen II a, II b oder II c zusammen mit BUNA HÜLS AP 447, das 1,33 Gew.-% Vulkanisationsmittel enthält, und anschließende Vulkanisation bei 180 bis 200 °C innerhalb von 15 Minuten.

## Patentansprüche

1. Verbundgegenstand aus mindestens einer harten und mindestens einer weichen Komponente, wobei die harte Komponente auf einem thermoplastischen Polyester basiert und die weiche Komponente durch dynamische Vulkanisation eines Gemisches hergestellt wird, das folgende Bestandteile enthält:
a) 50 bis 95 Gew.-Teile EP(D)M-Kautschuk,
b) 5 bis 50 Gew.-Teile thermoplastischer aromatischer Polyester, der aliphatische Doppelbindungen enthält,
c) 0 bis 45 Gew.-Teile unmodifizierter thermoplastischer aromatischer Polyester,
d) 0 bis 100 Gew.-Teile Weichmacheröl,
e) 0 bis 100 Gew.-Teile Verstärkungsmittel sowie
f) eine wirksame Menge eines Vernetzungsmittels.

2. Verbundgegenstand gemäß Anspruch 1,
dadurch gekennzeichnet,
daß die harte Komponente ein Polyester, eine Polyesterformmasse, ein Polyesterblend oder ein Faserverbundwerkstoff mit Polyestermatrix ist.

3. Verbundgegenstand gemäß einem der vorhergehenden Ansprüche,
dadurch gekennzeichnet,
daß der Polyester der harten Komponente ein Poly(alkylenterephthalat) und bevorzugt ein Poly(ethylenterephthalat) oder ein Poly(butylenterephthalat) ist.

4. Verbundgegenstand gemäß einem der vorhergehenden Ansprüche,
dadurch gekennzeichnet,
daß in der weichen Komponente bis zu 90 Gew.-% und bevorzugt bis zu 70 Gew.-% des EP(D)M-Kautschuks durch andere Kautschuke ersetzt ist.

5. Verbundgegenstand gemäß einem der vorhergehenden Ansprüche,
dadurch gekennzeichnet,
daß in der weichen Komponente der Polyester b) auf Basis von Terephthalsäure und einer Diolkomponente aufgebaut ist, die zu 0 bis 99,9 Mol-% aus Butandiol-(1,4) und zu 0,1 bis 100 Mol-% aus Butendiol-1,4 besteht.

6. Verbundgegenstand gemäß Anspruch 5,
dadurch gekennzeichnet,
daß der Gehalt an Butandiol-(1,4) 50 bis 99 Mol-% und der Gehalt an Butendiol-(1,4) 1 bis 50 Mol-% beträgt.

7. Verbundgegenstand gemäß einem der vorhergehenden Ansprüche,
dadurch gekennzeichnet,
daß in der weichen Komponente der Polyester c) ein Poly(alkylenterephthalat) und bevorzugt ein Poly(ethylenterephthalat) oder ein Poly(butylenterephthalat) ist.

8. Verbundgegenstand gemäß einem der vorhergehenden Ansprüche,
dadurch gekennzeichnet,
daß die weiche Komponente bis zu 25 Gew.-Teile, bezogen auf 100 Gew.-Teile Kautschuk, weitere Zusätze enthält.

9. Verbundgegenstand gemäß einem der vorhergehenden Ansprüche,
dadurch gekennzeichnet,
daß die weiche Komponente einen Gelgehalt im Bereich von 10 bis 97 Gew.-%, bevorzugt im Bereich von 30 bis 95 Gew.-% und besonders bevorzugt im Bereich von 45 bis 95 Gew.-% aufweist.

10. Verbundgegenstand gemäß einem der vorhergehenden Ansprüche,
dadurch gekennzeichnet,
daß bei der Herstellung der weichen Komponente das Vernetzungsmittel in einer Menge von 0,01 bis 2 Gew.-Teilen eingesetzt wird.

11. Verfahren zur Herstellung eines Verbundgegenstandes entsprechend einem der vorhergehenden Ansprüche,
dadurch gekennzeichnet,
daß die Herstellung des Verbundes ein- oder zweistufig erfolgt.
